# EUROPÄISCHE PATENTSCHRIFT

(11) **EP 3 090 969 B1**
(45) Veröffentlichungstag und Bekanntmachung des Hinweises auf die Patenterteilung: **11.09.2024**
(21) Anmeldenummer: 16175807.3
(22) Anmeldetag: 18.11.2013
(51) Int. Cl.: B65G 47/14, B65G 47/51

(54) **VORRICHTUNG ZUM PUFFERN VON BEHÄLTERVERSCHLÜSSEN**
DEVICE FOR BUFFERING CONTAINER CLOSURES
DISPOSITIF D'AMORTISSEMENT DE FERMETURES DE RECIPIENTS

(30) Priorität: 19.11.2012 DE 102012111131
(43) Veröffentlichungstag der Anmeldung: 09.11.2016
(62) Teilanmeldung aus: 13193244.4
(73) Patentinhaber: KRONES AG, 93073 Neutraubling (DE)
(72) Erfinder: BUCHHAUSER, Klaus, 93073 Neutraubling (DE); KLEPATZ, Sebastian, 93073 Neutraubling (DE); SCHÖNFELDER, Markus, 93073 Neutraubling (DE)
(74) Vertreter: Nordmeyer, Philipp Werner

(56) Entgegenhaltungen:
- WO-A1-2007/116155
- WO-A1-99/14139
- WO-A2-2005/069718
- DE-A1- 10 322 475
- DE-A1- 3 644 991
- GB-A- 980 963
- JP-Y1- S4 421 537
- US-A- 2 642 173
- US-A- 3 191 749
- US-A- 4 610 345
- US-A- 5 372 236
- US-A- 6 065 587
- US-A1- 2008 000 816
- US-A1- 2008 113 055

## Beschreibung

### Technisches Gebiet

Die vorliegende Erfindung betrifft eine Vorrichtung zum Puffern von Behälterverschlüssen in einer Getränkeabfüllanlage, besonders bevorzugt zum Puffern von Behälterverschlüssen für einen Verschließer einer Getränkeabfüllanlage.

### Stand der Technik

Es ist bekannt, Behälterverschlüsse und insbesondere Verschlusskappen für Behälter in einer Getränkeabfüllanlage mittels unterschiedlicher Transportvorrichtungen dem eigentlichen Verschließer zuzuführen. Hierbei ist es beispielsweise bekannt, die Behälterverschlüsse, beispielsweise Kunststoffschraubverschlüsse zum Verschließen von PET-Flaschen, über Führungsrinnen dem Verschließer zuzuführen. Höhenunterschiede zwischen unterschiedlichen Anlagenkomponenten können beispielsweise mittels Blasförderern, Förderbändern oder Wasserfallförderern überwunden werden.

Da es im Produktionsprozess in einer Getränkeabfüllanlage zu Unterbrechungen kommen kann, werden verschiedene Speichersysteme zwischen dem Sortierwerk, in welchem die jeweiligen Behälterverschlüsse lagerichtig sortiert werden, und dem eigentlichen Verschließer angeordnet. Diese Puffervorrichtungen können beispielsweise durch langgestreckte Rinnensysteme bereitgestellt werden, welche eine entsprechende Vorhaltkapazität für die Behälterverschlüsse aufweisen. Damit werden über Anordnungen, welche lange Transportwege für die lagerichtig vorsortierten Behälterverschlüsse aufweisen, entsprechende Pufferkapazitäten bereitgestellt. Wenn es dann zu einer Störung bei der Zuführung der Behälterverschlüsse zu dem Sortierwerk beziehungsweise einer Störung innerhalb des Sortierwerkes kommt, kann entsprechend der Produktionsprozess in der Getränkeabfüllanlage noch weiter betrieben werden, da eine entsprechend große Anzahl an Behälterverschlüssen noch in der Pufferkapazität eines solchen Systems vorhanden ist.

Der Platzbedarf solcher ausgedehnter Transportwege beziehungsweise langer Rinnensysteme ist jedoch nachteilig. Es sind daher Verschlusspuffer bekannt, welche kompaktere Pufferkapazitäten bereitstellen. Beispielsweise ist aus der DE 41 42 785 A1 eine Vorrichtung zur Verwendung bei einem Verschlussmagazin zum Einführen von Kronkorken oder dergleichen in einen Verschlusskanal bekannt, welche eine im Wesentlichen senkrecht angeordnete Pufferkapazität aufweist. Die entsprechenden Behälterverschlüsse werden über eine Verjüngung am Ausgang an das nachfolgende Rinnensystem geführt. Nachteilig an einem solchen Puffersystem ist, dass der durch die Schwerkraftförderung bedingte Höhenverlust ein erneutes Anheben der Behälterverschlüsse erforderlich macht beziehungsweise von vornherein die Behälterverschlüsse auf eine größere Höhe angehoben werden müssen. Weiterhin nachteilig ist, dass alle Verschlüsse entsprechend mit ihrem Gewicht nach unten drücken, so dass am Ausgang durch den entstehenden Staudruck große Kräfte entstehen können, welche in einer Deformation der Behälterverschlüsse resultieren können. Entsprechend ist der Verschleiß der Behälterverschlüsse aufgrund des hohen Staudrucks in einer solchen Puffervorrichtung, welche über ein Schwerkraftprinzip betrieben wird, bauartbedingt recht hoch.

Auch das in der EP 1 801 066 A2 beschriebene revolverartige Puffersystem verwendet den Höhenunterschied zur Leerung des jeweiligen Revolverschachtes. Zum einen ergibt sich hieraus eine aufwändige Konstruktion des Puffers, wobei der am Ausgang anstehende Staudruck aufgrund der Höhe der übereinander gestapelten Behälterverschlüsse wieder relativ hoch ist, und zum anderen tritt wieder der vorgenannte Höhenverlust auf, welcher entweder vor oder nach dem revolverförmigen Puffersystem überwunden werden muss.

Auch bei den in der DE 698 00 834 T2 und der EP 1 803 681 A2 bekannten Pufferlösungen findet ein Höhenverlust statt, welcher entweder vor oder nach den jeweiligen Puffern überwunden werden muss, um die eigentliche Verarbeitungshöhe im Verschließer zu erreichen.

Die WO 2007/116155 A1 beschreibt eine Vorrichtung zum Zuführen von Vorformlingen. Die WO 2005/069718 A2 beschreibt eine Vorrichtung mit den Merkmalen des Oberbegriffs des Anspruchs 1 und ein Verfahren zum längsseitigen Ausrichten von Betonblöcken.

### Darstellung der Erfindung

Ausgehend von dem genannten Stand der Technik ist es entsprechend eine Aufgabe der vorliegenden Erfindung, eine Vorrichtung zum Puffern von Behälterverschlüssen in einer Getränkeabfüllanlage anzugeben, welche den Verschleiß der Behälterverschlüsse verringert und welche den Anlagenaufbau effizienter gestaltbar macht.

Diese Aufgabe wird durch eine Vorrichtung zum Puffern von Behälterverschlüssen mit den Merkmalen des Anspruchs 1 gelöst. Vorteilhafte Ausgestaltungen ergeben sich aus den Unteransprüchen.

Durch das Bereitstellen einer rotierbaren Pufferfläche zur Aufnahme der Behälterverschlüsse wird erreicht, dass die individuellen, in dem Puffer aufzunehmenden Behälterverschlüsse unter Zurücklegung eines relativ kurzen Weges auf der Pufferfläche gespeichert werden können. Beim Aufbau des Puffers finden die Behälterverschlüsse zunächst jeweils einen im Wesentlichen freien Abschnitt der Pufferfläche vor, auf welchem sie zwischengespeichert werden können. Während des Puffervorgangs wird bevorzugt die rotierbare Pufferfläche langsam rotiert, so dass ein zwischenzuspeichernder Behälterverschluss auf einem kurzen Verschiebeweg einen Flächenabschnitt auf der rotierbaren Pufferfläche vorfindet, auf welchem er zwischengespeichert werden kann. Durch die Rotation der Pufferfläche wird entsprechend der Weg, welcher von einem zu speichernden Behälterverschluss auf der rotierbaren Pufferfläche zurücklegt werden muss, minimiert, da beispielsweise beim Aufschieben des jeweiligen Behälterverschlusses auf die rotierbare Pufferfläche typischerweise ein Weg bis maximal zur Rotationsachse der rotierbaren Pufferfläche zurückgelegt werden wird.

Dadurch, dass der Zulauf der Behälterverschlüsse auf die Pufferfläche geführt ist, wird zunächst ein Puffer aufgebaut, welcher dann durch die entsprechende Rotation der Pufferfläche die Behälterverschlüsse aufgrund der Fliehkraft nach außen fördert, wo sie dann der Transportfläche übergeben werden, um ein Auslaufen der Behälterverschlüsse zu erreichen.

Gleichzeitig ermöglicht das Zwischenspeichern der Behälterverschlüsse auf der rotierbaren Pufferfläche, dass die entsprechenden Behälterverschlüsse durch Rotation der rotierbaren Pufferfläche und der daraus entstehenden Fliehkräfte auf einfache Weise wieder von der Pufferfläche abgeräumt werden können. Dabei unterstützen die vom Abstand von der Rotationsachse abhängigen unterschiedlichen Umfangsgeschwindigkeiten das Abräumen des Puffers von außen nach innen, so dass ein überhöhter Staudruck nicht auftritt und die Behälterverschlüsse entsprechend verschleißarm abgeräumt werden können.

Dadurch, dass die rotierbare Pufferfläche waagerecht orientiert ist, kann ein Staudruck der einzelnen Behälterverschlüsse gegeneinander, welcher im Stand der Technik durch das Übereinanderstapeln der jeweiligen Behälterverschlüsse entsteht, nicht auftreten. Der Verschleiß der Behälterverschlüsse sowie die Gefahr einer Deformation werden entsprechend gering gehalten, wodurch das Risiko von Verklemmungen zwischen den Behälterverschlüssen im weiteren Bearbeitungsprozess minimiert wird und ein störungsfreier Betrieb gewährleistet ist.

Weiterhin kann durch die waagerechte Anordnung der rotierbaren Pufferfläche ein Höhenverlust zwischen dem waagerecht orientierten Auslauf der jeweiligen Behälterverschlüsse vermieden werden. Dadurch kann die Energie, welche für die Förderung der jeweiligen Behälterverschlüsse aufgewendet werden muss, auf dem notwendigen Minimum gehalten werden, da auf die Überwindung zusätzlicher Höhenunterschiede, welche durch die Ausbildung der Puffervorrichtungen des Standes der Technik bedingt waren, verzichtet werden kann.

Die Pufferfläche ist bevorzugt durch eine Pufferscheibe ausgebildet, welche um eine Rotationsachse herum rotierbar ist. Durch die Pufferscheibe wird eine rotationssymmetrische Pufferfläche bereitgestellt, welche entsprechend eine sanfte Handhabung der Behälterverschlüsse ermöglicht, da der Übergang der jeweiligen Behälterverschlüsse von dem Zulauf auf die Pufferscheibe, beziehungsweise von der Pufferscheibe zu dem Auslauf sanft vor sich gehen kann.

In einer alternativen nicht erfindungsgemäßen Ausführungsform können die gleichen Vorteile auch mit einer Pufferfläche erreicht werden, welche als rotierbarer Pufferring ausgebildet ist. Der Pufferring weist dann bevorzugt eine Begrenzung für die Behälterverschlüsse auf, um ein Herabfallen von Behälterverschlüssen von dem Pufferring zu vermeiden. Durch die Verwendung eines Pufferrings lässt sich im Zentrum der Vorrichtung eine Wartungsöffnung ausbilden, durch welche hindurch ein Zugang zu der Pufferfläche auch bei einem beengten Einbau der Vorrichtung in einer Getränkeabfüllanlage erreicht werden kann. Mit anderen Worten kann ein Bediener oder Wartungspersonal von unten her durch die Wartungsöffnung des Pufferrings hindurchreichen oder -je nach Dimensionierung - auch hindurch steigen, um Wartungsarbeiten, die Behebung einer Störung oder andere Arbeiten auch an der jeweiligen Oberseite der Pufferflächen durchführen zu können.

Die Pufferfläche schließt an die Transportfläche zum Transportieren der Behälterverschlüsse vom Zulauf zum Auslauf an und ist von einer solchen Transportfläche umgeben. Der Transport der Behälterverschlüsse über die Transportfläche findet bevorzugt pufferfrei, also in Form eines Bypass, statt. Mit anderen Worten werden die Behälterverschlüsse in einer bevorzugen Weiterbildung durch die Transportfläche vom Zulauf übernommen und dann auf der Transportfläche direkt zum Auslauf transportiert, ohne dass die Behälterverschlüsse mit der Pufferfläche in signifikanten Kontakt kommen.

Es besteht auch die Möglichkeit, dass Pufferfläche und Transportfläche mit dergleichen Winkelgeschwindigkeit betrieben werden.

Die Transportfläche ist in einer besonders bevorzugten Weiterbildung als ringförmiger Transportring vorgesehen und umgibt besonders bevorzugt eine kreisförmige Pufferscheibe oder einen ringförmigen Pufferring. Entsprechend sind der Transportring und die Pufferscheibe oder der Pufferring bevorzugt konzentrisch bezüglich der Rotationsachse der rotierbaren Pufferfläche angeordnet und der Transportring liegt außerhalb der Pufferscheibe oder des Pufferrings. Auf diese Weise kann im Gleichgewichtsbetrieb, in welchem eine Pufferleistung für die Behälterverschlüsse nicht notwendig ist, ein direkter, pufferfreier Transport zwischen dem Zulauf und dem Auslauf erreicht werden. Dabei werden die Behälterverschlüsse so entlang des Transportringes beziehungsweise entlang der Transportfläche geführt, dass sie auf die im Zentrum angeordnete Pufferfläche nicht aufgeschoben werden. Die Transportfläche kann auch als Ringabschnitt oder in jeglicher anderen Geometrie ausgebildet sein, welche anschließend an einen Bereich der Pufferfläche angeordnet sein kann.

In einer besonders bevorzugten Weiterbildung ist die Transportfläche als Transportring so ausgebildet, dass er in Transportrichtung rotiert. Entsprechend wird im Gleichgewichtsbetrieb ein Behälterverschluss vom Zulauf auf den Transportring aufgeschoben, dann auf dem Transportring schonend und reibungsarm zum Auslauf transportiert, und dann dem Auslauf übergeben. Entsprechend kann im Gleichgewichtsbetrieb ein sehr verschleißarmer Transport der Behälterverschlüsse erreicht werden.

Wenn eine Störung auftritt, beispielsweise am Auslauf, wird zunächst der Transportring durch weiteres Aufschieben von Behälterverschlüssen zwischen dem Zulauf und dem Auslauf vollständig aufgefüllt. Wenn der Transportring dann vollständig aufgefüllt ist, werden die weiter über den Zulauf nachgeförderten Behälterverschlüsse entsprechend auf die innerhalb des Transportrings angeordnete Pufferfläche verdrängt und bauen einen Puffer auf der Pufferfläche auf.

Durch eine langsame Rotation der rotierbaren Pufferfläche kann dabei ein materialschonendes Aufschieben der einzelnen Behälterverschlüsse erreicht werden, da die jeweils zurückzulegenden Verschiebewege auf der Pufferfläche kurz gehalten werden, so dass eine verschleißarme Handhabung der jeweiligen Behälterverschlüsse erreicht wird. Wenn die Störung am Auslauf dann wieder behoben ist und wieder Bedarf an Behälterverschlüssen vorliegt, werden zunächst die Behälterverschlüsse, welche sich auf der Transportfläche, beispielsweise dem Transportring, befinden, dem Auslauf zugeführt. Dann werden nach und nach die sich auf der Pufferfläche befindenden Behälterverschlüsse durch eine erhöhte Rotation der rotierbaren Pufferfläche nach außen gedrängt und entsprechend aufgrund der wirkenden Fliehkräfte auf den Transportring aufgeschleust. Dies kann stattfinden, bis der gesamte, auf der Pufferscheibe aufgenommene Puffervorrat wieder abgeräumt ist.

In einer Variante kann, beispielsweise vor Produktionsbeginn, zunächst der Zulauf mit einer höheren Förderkapazität betrieben werden, als am Auslauf gefordert, so dass ein Puffer, so wie vorher beschrieben, auf der Pufferfläche aufgebaut wird. Danach kann der Zulauf entsprechend gedrosselt werden, und, im Falle einer Unterbrechung des Zulaufs, der auf der Pufferscheibe akkumulierte Puffer abgeräumt werden, um eine unterbrechungsfreie Produktion sicherzustellen.

Die Transportfläche ist unabhängig von der Pufferfläche rotierbar. Hierdurch kann die Transportleistung im Gleichgewichtsbetrieb so eingestellt werden, dass die Behälterverschlüsse vom Zulauf zum Auslauf transportiert werden, ohne dass ein Puffer aufgebaut oder abgebaut wird. Die Behälterverschlüsse werden dabei besonders bevorzugt so geführt, dass sie einander nicht berühren, so dass sich über die beschriebene Transportfläche ein entsprechend verschleißarmer Transport ergibt. Die unabhängige Steuerung der Rotation der Pufferfläche, welche von der Transportfläche umgeben ist, ermöglicht entsprechend ein verschleißarmes Auffahren der Behälterverschlüsse und entsprechend ein verschleißarmes Abräumen der Pufferfläche, wenn die Pufferkapazität verwendet werden soll.

In einer weiteren nicht erfindungsgemäßen Weiterbildung sind mindestens zwei Zuläufe vorgesehen und/oder mindestens ein Zulauf ist mehrspurig ausgebildet, so dass der Zulauf von mindestens zwei Behälterverschlüssen gleichzeitig auf die Transportfläche und/oder die Pufferfläche möglich ist, oder aber eine Mehrzahl von Behälterverschlüssen gleichzeitig in die Vorrichtung eingebracht werden, wobei beispielsweise jeweils nur eines auf der Transportfläche aufgebracht wird und die übrigen auf die Pufferfläche verdrängt werden. Es können über die mindestens zwei Zuläufe auch Behälterverschlüsse von unterschiedlichen Vorstationen der Getränkeabfüllanlage übernommen werden.

In einer weiteren nicht erfindungsgemäßen Weiterbildung sind mindestens zwei Abläufe und/oder mindestens ein mehrspuriger Auslauf vorgesehen, um beispielsweise mehrere Abnehmer zur weiteren Bearbeitung der Behälterverschlüsse zu bedienen.

In einer weiteren nicht erfindungsgemäßen Ausführungsform sind mindestens zwei übereinander angeordnete Pufferflächen vorgesehen, wobei eine mit einem Zulauf und eine andere mit einem Auslauf verbunden sind. Die Pufferflächen sind dabei bevorzugt über Verbindungsflächen, beispielsweise Rutschen, miteinander verbunden. Auf diese Weise können Behälterverschlüsse die übereinander angeordneten Pufferflächen vom Zulauf zum Auslauf hin nacheinander durchlaufen, so dass eine entsprechend vergrößerte Gesamtpufferfläche bereitgestellt wird.

In einer weiteren nicht erfindungsgemäßen Ausführungsform ist oberhalb der Pufferfläche eine Führungsfläche so beabstandet angeordnet, dass die Behälterverschlüsse zwischen der Pufferfläche und der Führungsfläche lagerichtig führbar sind. Diese Führungsfläche kann stillstehend ausgebildet sein oder gemeinsam mit der Pufferfläche rotieren. Durch die Führungsfläche wird vermieden, dass die schon ausgerichteten und richtig orientiert zugeführten Behälterverschlüsse wieder in eine falsche Ausrichtung gebracht werden. Entsprechend ist bevorzugt ein Abstand zwischen der Pufferfläche und der Führungsfläche auf eine geometrische Abmessung der Behälterverschlüsse hin ausgelegt.

Um die Kapazität der vorgeschlagenen Vorrichtung zum Puffern zu erhöhen, ist in einer nicht erfindungsgemäßen Ausführungsform mindestens eine zweite Pufferfläche vorgesehen, welche über der ersten Pufferfläche angeordnet ist. Entsprechend kann durch ein Anheben der Pufferflächen entweder die eine Pufferfläche oder die andere Pufferfläche selektiv dem Strom an Behälterverschlüssen ausgesetzt werden beziehungsweise es können Behälterverschlüsse von diesen Pufferflächen nacheinander ausgegeben werden.

Um unterschiedlich dimensionierte Behälterverschlüsse auf den übereinander angeordneten Pufferflächen aufnehmen zu können und gleichzeitig einen möglichst geringen Volumenbedarf der Gesamtvorrichtung zu erreichen, kann der senkrechte Abstand zwischen den Pufferflächen auf die jeweilige Höhe des Behälterverschlusss eingestellt werden. Beispielsweise kann bei einer Verarbeitung von hohen Kunststoffschraubverschlüssen ein entsprechender Abstand zwischen den beiden Pufferflächen eingestellt werden, und bei der Verarbeitung von flachen Kunststoffschraubverschlüssen entsprechend ein niedrigerer Abstand gewählt werden, so dass die gesamte Höhe des Pufferturmes begrenzt bleibt. Dadurch kann wenigstens die Unterseite eines die Pufferfläche ausbildenden Bauteils, beispielsweise einer Pufferscheibe oder eines Pufferrings, als Führungsfläche für eine darunter angeordnete zweite Pufferfläche dienen. Eine Einstellung des Abstandes kann auch zwischen einer Führungsfläche und einer Pufferfläche vorgenommen werden.

Die oben genannte Aufgabe wird weiterhin auch durch ein Verfahren mit den Merkmalen des Anspruchs 5 gelöst.

### Kurze Beschreibung der Figuren

Bevorzugte weitere Ausführungsformen der vorliegenden Erfindung werden durch die nachfolgende Beschreibung der Figuren näher erläutert. Dabei zeigen:
- Figur 1: eine schematische perspektivische Darstellung einer Vorrichtung zum Puffern von Behälterverschlüssen in einer Getränkeabfüllanlage;
- Figur 2: eine Draufsicht auf die in Figur 1 gezeigte Vorrichtung;
- Figur 3: eine schematische Seitenansicht auf eine weitere Vorrichtung zum Puffern von Behälterverschlüssen, welche mehrere Pufferflächen umfasst;
- Figur 4: eine Detailansicht aus der in Figur 3 gezeigten Vorrichtung;
- Figur 5: eine schematische Seitenansicht einer Vorrichtung zum Puffern von Behälterverschlüssen mit drei übereinander angeordneten, über Verbindungsflächen miteinander verbundenen Pufferflächen;
- Figur 6: eine schematische Seitenansicht einer Vorrichtung zum Puffern von Behälterverschlüssen mit separaten Führungsflächen;
- Figur 7: eine schematische perspektivische Darstellung einer Vorrichtung zum Puffern von Behälterverschlüssen mit mehreren Zuläufen;
- Figur 8: eine schematische perspektivische Darstellung einer Vorrichtung zum Puffern von Behälterverschlüssen mit zwei Abläufen;
- Figur 9: eine schematische perspektivische Darstellung einer Vorrichtung zum Puffern mit einem auf die Pufferfläche mündenden Zulauf gemäß einem Ausführungsbeispiel der vorliegenden Erfindung; und
- Figur 10: eine schematische perspektivische Ansicht einer Vorrichtung zum Puffern, welche eine zentrale Wartungsöffnung in einer Pufferfläche umfasst.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

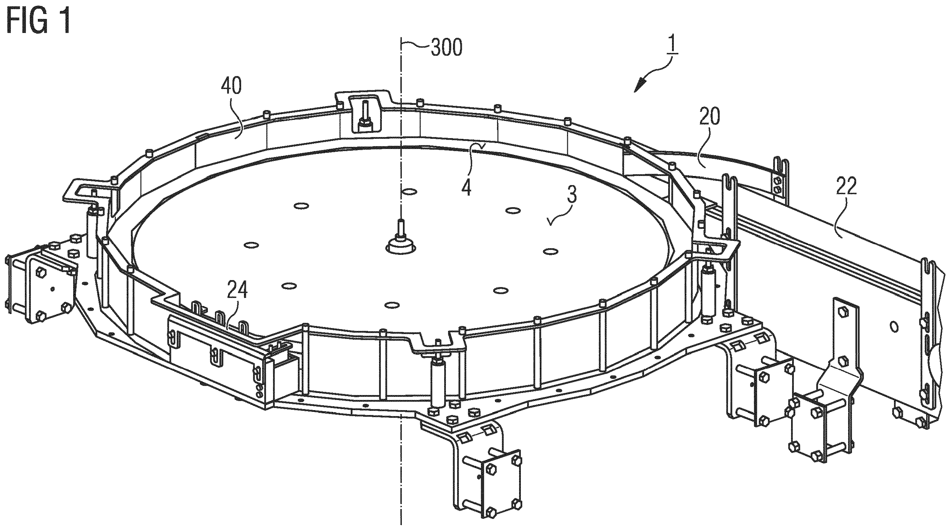

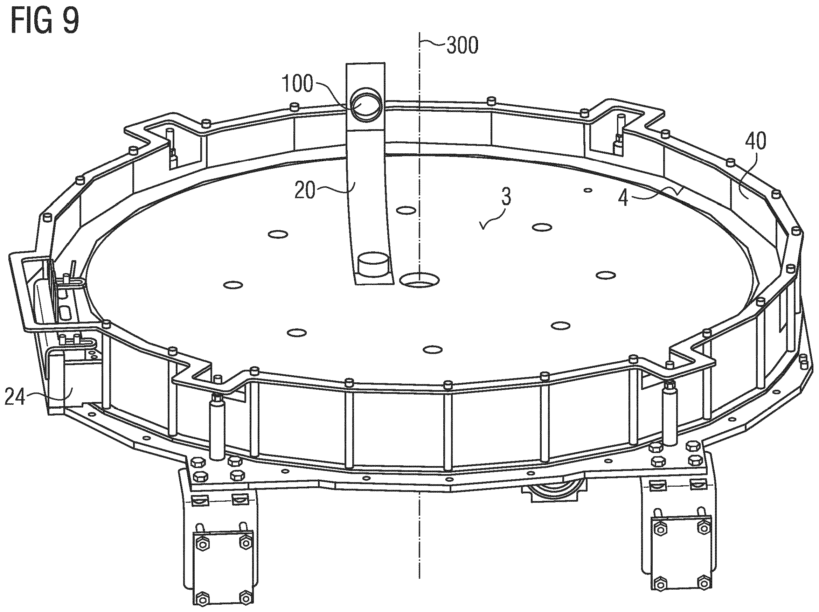

Die Erfindung wird im unabhängigen Anspruch 1 definiert. Bevorzugte Ausführungsformen der Erfindung sind in den abhängigen Ansprüchen angegeben. Eine Vorrichtung gemäß der vorliegenden Erfindung ist in der Figur 9 dargestellt. Die in den Figuren 1-8 und 10 gezeigten Ausführungsformen sind nicht Bestandteil der Erfindung.

Figur 1 zeigt eine Vorrichtung 1 zum Puffern von Behälterverschlüssen, beispielsweise von auf PET-Flaschen aufschraubbaren Kunststoffschraubverschlüssen, in einer Getränkeabfüllanlage.

Die Vorrichtung 1 zum Puffern umfasst einen Zulauf 20, mittels welchem die Behälterverschlüsse, welche über ein Transportband 22 bereitgestellt werden, zugeführt werden. Ein Auslauf 24 ist ebenfalls vorgesehen, mittels welchem die Behälterverschlüsse wieder aus der Vorrichtung 1 ausgeschleust werden können, um sie dann nachfolgenden Bearbeitungsschritten zur Verfügung zu stellen. Üblicherweise werden Behälterverschlüsse beispielsweise in Form von Behälterverschlüssen dem Zulauf 20 über das Transportband 22 von einem Sortierwerk aus zugeführt, welches beispielsweise für eine einwandfreie und einheitliche Qualität der zugeführten Behälterverschlüsse sorgt, sowie eine einheitliche Ausrichtung der Behälterverschlüsse sicher stellt.

Der Auslauf 24 mündet typischerweise in eine weitere Transportvorrichtung, beispielsweise in eine Transportrinne oder auf ein Transportband, mittels welchem die aus der Vorrichtung 1 ausgeschleusten Behälterverschlüsse einem weiteren Bearbeitungsschritt zugeführt werden. Beispielsweise können Behälterverschlüsse auf diese Weise einem Verschließer zugeführt werden, welcher die Behälterverschlüsse dann auf zu verschließende Behälter aufbringt. Ein typischer, nachgeschalteter Verschließer umfasst Verschließköpfe, mittels welchen Kunststoffschraubverschlüsse auf die entsprechenden Gewinde an den Mündungen von PET-Flaschen aufgeschraubt werden können.

Die Vorrichtung 1 zum Puffern der Behälterverschlüsse umfasst zwischen dem Zulauf 20 und dem Auslauf 24 eine rotierbare Pufferfläche 3, welche in dem in Figur 1 gezeigten Ausführungsbeispiel als rotierbare Pufferscheibe ausgebildet ist, die um eine Rotationsachse 300 rotierbar ist. Die rotierbare Pufferfläche 3 wird dabei über einen nicht gezeigten Antrieb, beispielsweise einen Elektromotor mit einem angepassten Getriebe, in Rotation versetzt.

Die rotierbare Pufferfläche 3 dient zum Puffern der über den Zulauf 20 zufließenden Behälterverschlüsse, wobei durch die Rotation der rotierbaren Pufferfläche 3 von vornherein eine gleichmäßige Verteilung der Behälterverschlüsse auf der Pufferfläche 3 erreicht werden kann, ohne dass die Behälterverschlüsse einem erhöhten Staudruck ausgesetzt wären. Weiterhin kann durch die Rotation der rotierbaren Pufferfläche 3 erreicht werden, dass die einzelnen Behälterverschlüsse beim Aufbau des Puffers sowie beim Abbau des Puffers nur relativ kurze Verschiebewege auf der Pufferfläche 3 zurücklegen müssen. Durch die Reduktion der Verschiebewege auf der Pufferfläche 3 wird eine Reduktion des Verschleißes der Behälterverschlüsse erreicht.

Insbesondere ermöglicht es die Rotierbarkeit der Pufferfläche 3, dass mittels des Zulaufs 20 zugeführte Behälterverschlüsse zunächst stets einen freien Bereich auf der Pufferfläche 3 vorfinden, auf welchen sie aufgeschoben werden können. Wenn sich die Pufferfläche 3 während des Aufbauens des Puffers nach und nach mit Behälterverschlüssen füllt, so wird durch die Rotation der Pufferfläche immer noch ein möglichst kurzer Weg für die individuellen Behälterverschlüsse auf der Pufferfläche 3 gefunden. Die dabei maximal zurückzulegende Wegstrecke entspricht im Wesentlichen in etwa dem Radius der Pufferscheibe.

Wenn die Pufferfläche 3 beim Aufbau des Puffers vollständig mit Behälterverschlüssen gefüllt ist, so muss der Zufluss an neuen Behälterverschlüssen über den Zulauf 20 gestoppt werden, zumindest wenn keine gleichzeitige Abnahme an Behälterverschlüssen über den Auslauf 24 stattfindet. Der Füllzustand der Pufferfläche 3 wird über einen hier nicht gezeigten Sensor überwacht.

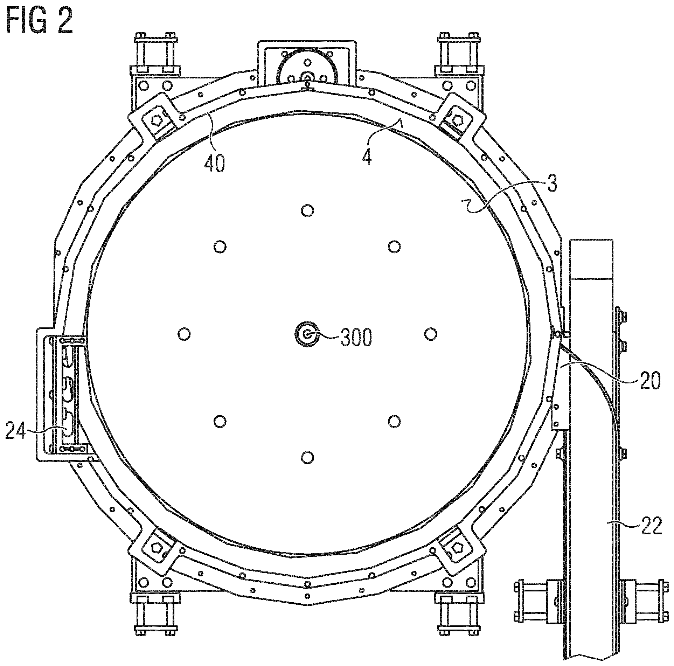

In der in den Figuren 1 und 2 gezeigten Vorrichtung ist weiterhin eine Transportfläche 4 vorgesehen, welche die Pufferfläche 3 umgibt. In der gezeigten Vorrichtung ist die Transportfläche 4 als Transportring ausgebildet. Die Transportfläche 4 schließt auf ihrer Innenseite direkt an die Pufferscheibe 3 an und grenzt an ihrer Außenseite an eine Außenwand 40, welche ein Herabrutschen der Behälterverschlüsse nach außen von der Transportfläche 4 verhindert. Die Außenwand 40 dient entsprechend auch zur Führung der Behälterverschlüsse.

Im Gleichgewichtsbetrieb, bei welchem der Puffer auf der Pufferfläche 3 unverändert bleibt, also weder auf- noch abgebaut wird, werden die Behälterverschlüsse über das Transportband 22 am Zulauf 20 zur Verfügung gestellt, und werden dann entlang der Transportfläche 4 zum Auslauf 24 gefördert. Die Transportfläche 4 kann dabei entweder stationär ausgebildet sein, oder aber sie kann - wie die Pufferfläche 3 - rotierbar sein.

Im Falle einer stationären Transportfläche 4 findet der Transport der Behälterverschlüsse vom Zulauf 20 zum Auslauf 24 aufgrund des über die vom Zulauf 20 zugeführten Behälterverschlüsse aufgebauten geringen Staudrucks statt, wobei die Behälterverschlüsse dann entlang der Außenwand 40 zum Auslauf 24 gedrängt werden.

In einer bevorzugten Variante wird die Transportfläche 4 jedoch - bevorzugt mit Maschinengeschwindigkeit - so rotiert, dass die über den Zulauf 20 zugeführten Behälterverschlüsse von der Transportfläche 4 unmittelbar abtransportiert werden und dann direkt dem Auslauf 24 zugeführt werden. Durch den unmittelbaren Abtransport der Behälterverschlüsse vom Zulauf 20 ergibt sich kein Staudruck und die Behälterverschlüsse gleiten auch kaum oder gar nicht auf der Transportoberfläche 4, so dass eine sehr schonende und verschleißarme Handhabung der Behälterverschlüsse erreicht wird.

Am Auslauf 24 werden die Behälterverschlüsse dann ebenfalls unmittelbar abgenommen, so dass sich auch hier kein Staudruck aufbaut und entsprechend auch hier eine verschleißarme und schonende Handhabung der Behälterverschlüsse resultiert. Diese Betriebsweise mit einer auf Maschinengeschwindigkeit rotierenden Transportfläche 4 hat weiterhin den Vorteil, dass die einzelnen Behälterverschlüsse auf der Transportfläche 4 nicht aneinander anstoßen, sondern vom Zulauf 20 über die Transportfläche 4 direkt abgefördert werden. Entsprechend findet im Gleichgewichtsbetrieb, bei welchem der Puffer an Behälterverschlüssen auf der Pufferfläche 3 unberührt bleibt, ein sehr schonendes und verschleißarmes Fördern der Behälterverschlüsse statt.

Der Mechanismus des Aufbauens eines Puffers an Behälterverschlüssen auf der Pufferfläche 3 wurde bereits oben beschrieben. Hierbei sind im Wesentlichen zwei Szenarien denkbar. Zum einen kann auf der Seite des Auslaufs 24 eine Störung auftreten, so dass die Behälterverschlüsse über den Auslauf 24 nicht mehr, oder nicht mehr in dem erforderlichen Umfang, abgenommen werden. Es bildet sich entsprechend ein Rückstau auf der Transportfläche 4 aus, welcher dazu führt, dass die nachfolgend über den Zulauf 20 zugeführten Behälterverschlüsse auf die Pufferfläche 3 abgedrängt werden. Entsprechend baut sich in diesem Falle ein Puffer an Behälterverschlüssen auf der Pufferfläche 3 auf.

Die Pufferfläche 3 wird während dieses Aufbaus des Puffers bevorzugt langsam rotiert. Durch die langsame Rotation der Pufferfläche 3 wird die Pufferfläche 3 relativ gleichmäßig mit den über den Zulauf 20 weiter zugeführten Behälterverschlüssen belegt und die einzelnen Verschiebewege der Behälterverschlüsse auf der Pufferfläche 3 sind begrenzt, so dass ein verschleißarmer Aufbau des Puffers erreicht werden kann. Dieser Vorgang des Aufbauens des Puffers auf der Pufferfläche 3 wird erst dann gestoppt, wenn über einen hier nicht dargestellten Sensor festgestellt wird, dass die Pufferfläche 3 im Wesentlichen vollständig mit Behälterverschlüssen belegt ist.

Zum anderen kann zum gezielten Aufbau eines Puffers an Behälterverschlüssen auf der Pufferfläche 3 die Zufuhr an Behälterverschlüssen über den Zulauf 20 mit einer höheren Kapazität bereitgestellt werden, als über den Auslauf 24 wieder abgeführt werden. Entsprechend baut sich auf die eben beschriebene Weise wieder ein Rückstau der Behälterverschlüsse auf der Transportfläche 4 auf, welcher schlussendlich wieder zu einem teilweisen Verdrängen der nachfolgend über den Zulauf 20 bereit gestellten Behälterverschlüsse auf die Pufferfläche 3 führt. Auf diese Weise wird entsprechend ein Puffer an Behälterverschlüssen auf der rotierbaren Pufferfläche 3 aufgebaut.

Die Pufferfläche 3 und die Transportfläche 4 sind bevorzugt so über getrennte Antriebe antreibbar, dass sie unabhängig voneinander und mit unterschiedlichen Geschwindigkeiten rotieren können. Beispielsweise ist es im Gleichgewichtsbetrieb vorgesehen, dass die Transportfläche 4 mit Maschinengeschwindigkeit rotiert, die Pufferfläche 3 aber nur langsam oder aber überhaupt nicht rotiert, da ein Aufbau oder Abbau des Puffers auf der Pufferfläche 3 nicht stattfindet.

Weiterhin ist es beim gezielten Aufbau eines Puffers an Behälterverschlüssen auf der Pufferfläche 3 denkbar, die Transportfläche 4 nur langsam zu rotieren oder gar anzuhalten, und gleichzeitig die Pufferfläche 3 langsam zu rotieren, so dass entsprechend die vom Zulauf 20 bereit gestellten Behälterverschlüsse in möglichst freie Bereiche der Pufferfläche 3 geschoben werden. Hierdurch wird ein möglichst verschleißarmes Aufbringen der Behälterverschlüsse auf die Pufferfläche 3 erreicht.

Bei einem gewünschten Abbau des Puffers wird die Pufferfläche 3 mit einer höheren Geschwindigkeit rotiert, um über die auf die jeweiligen Behälterverschlüsse wirkenden Zentrifugalkräfte ein langsames Abräumen der Behälterverschlüsse von der Pufferfläche 3 von außen nach innen zu erreichen. Durch die wirkenden Zentrifugalkräfte werden die Behälterverschlüsse nach außen gedrängt und erreichen entsprechend die Transportfläche 4. Die Transportfläche 4 wird dann entweder langsam oder mit Maschinengeschwindigkeit rotiert, um die Behälterverschlüsse dann dem Auslauf 24 und damit der nächsten Behandlungsstufe zuzuführen.

Über die genannte unabhängige Antreibbarkeit der Pufferfläche 3 und der Transportfläche 4 kann flexibel ein Puffer auf- und abgebaut werden beziehungsweise im Gleichgewichtsbetrieb der Puffer unangetastet bleiben, wobei der auf die Behälterverschlüsse aufgebrachte Verschleiß minimiert wird.

Wie sich beispielsweise aus Figur 1 ergibt, sind der Zulauf 20 und der Auslauf 24 relativ zueinander auf der gleichen Höhe angeordnet und die Pufferfläche 3 ist waagerecht orientiert. Auch die die Pufferfläche 3 umgebende Transportfläche 4 ist waagerecht orientiert. Durch diese waagerechte Orientierung der Pufferfläche 3, der Transportfläche 4 sowie des Zulaufes 20 und des Auslaufes 24 kann erreicht werden, dass eine Pufferung stattfindet, ohne dass davor oder danach ein zusätzlicher Höhenunterschied überwunden werden müsste, welcher wiederum einen zusätzlichen Energiebedarf nach sich ziehen würde. Weiterhin lässt sich auf diese Weise die Bauhöhe der Vorrichtung 1 im Kontext mit den übrigen Anlagenkomponenten, also beispielsweise einem Verschließer in einer Getränkeabfüllanlage, optimieren.

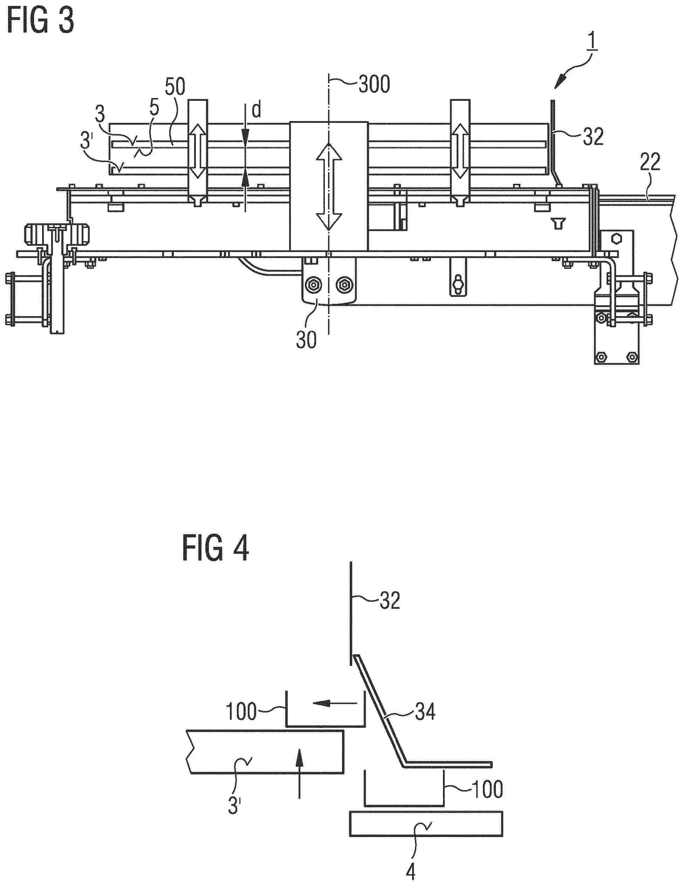

In den Figuren 3 und 4 ist eine Vorrichtung 1 gezeigt, bei welcher zwei senkrecht übereinander angeordnete Pufferflächen 3 und 3` vorgesehen sind, welche über einen gemeinsamen Antrieb 30 rotierbar sind. Insbesondere sind die beiden Pufferflächen 3, 3' mit einer gemeinsamen Welle des Antriebes 30 verbunden.

Um das Puffervolumen der Pufferscheibe 3 zu verdoppeln beziehungsweise zu vervielfachen, sind entsprechend die beiden übereinander angeordneten Pufferflächen 3, 3' vorgesehen, welche jeweils zur Aufnahme von Behälterverschlüssen geeignet sind. Es können beliebig viele solcher Pufferflächen 3, 3' übereinander angeordnet werden, um die entsprechend notwendigen Kapazitäten bereit zu stellen.

Die Pufferflächen 3, 3' können sich abwechselnd auf die Ebene der Transportfläche 4 bewegen, so dass in einem ersten Zustand, in welchem der Puffer befüllt werden soll, zunächst die erste Pufferfläche 3 auf Höhe der Transportfläche 4 angeordnet ist, um ein Zuführen von Behälterverschlüssen auf die erste Pufferfläche 3 zu ermöglichen. Wenn dann über einen Sensor festgestellt wird, dass die erste Pufferfläche 3 vollständig gefüllt ist, wird diese erste Pufferfläche 3 angehoben und die zweite Pufferfläche 3' wird auf die Höhe der Transportfläche 4 angehoben. Dann kann auch die zweite Pufferfläche 3' mit Behälterverschlüssen bestückt werden. Entsprechend kann auf die in den Figuren 3 und 4 gezeigte Weise die Pufferkapazität verdoppelt werden. Eine beliebige Anzahl an Pufferflächen 3, 3' kann übereinander angeordnet werden, um die Pufferkapazität in dieser kompakten Ausbildung entsprechend zu vervielfachen.

In Figur 4 ist schematisch eine Darstellung einer Seitenwand 32 mit einem Abweisbereich 34 gezeigt, welcher dazu dient, eventuell über den Rand der Pufferfläche 3' herausstehende Behälterverschlüsse 100, welche hier durch schematisch angedeutete Behälterverschlüsse gezeigt sind, auf die Pufferfläche 3' zu schieben, um ein problemloses Anheben beziehungsweise Absenken der Pufferflächen 3, 3' zu ermöglichen. Der Abweisbereich 34 ist konisch ausgebildet, so dass die Behälterverschlüsse 100 entsprechend nach innen gedrängt werden.

Um weiterhin ein besonders effektives Puffern von Behälterverschlüssen zu ermöglichen, kann auch der Höhenabstand d zwischen den Pufferflächen 3, 3', welche hier wiederum als Pufferscheiben ausgebildet sind, so eingestellt werden, dass die entsprechenden Behälterverschlüsse zwischen den einzelnen Pufferflächen 3, 3' Platz haben. Damit kann beispielsweise ein flacher Behälterverschluss zwischen Pufferflächen 3, 3' aufgenommen werden, welche in einem geringeren Abstand d voneinander beabstandet sind, wohingegen größer dimensionierte Behälterverschlüsse einen größeren Abstand d erfordern. Auch auf diese Weise kann ein besonders effizienter, flexibler und kompakter Puffervorgang bereitgestellt werden.

In einer nicht gezeigten Vorrichtung wird der Zulauf nicht, wie in Figuren 1 und 2 gezeigt, von der Seite her erledigt, so dass die Behälterverschlüsse direkt auf der Transportfläche 4 aufgeschoben werden, sondern der Zulauf mündet direkt auf die Pufferfläche 3. Damit werden sämtliche Behälterverschlüsse über die Pufferfläche 3 geführt. Bei einer solchen Vorrichtung ist es jedoch notwendig, dass die Pufferfläche mit einer hinreichend hohen Geschwindigkeit rotiert, welche eine Fliehkraft bedingte Auswärtsbewegung der Behälterverschlüsse in Richtung der Transportfläche 4 ermöglicht, um ein Zufördern der Behälterverschlüsse zu dem Auslauf 24 zu unterstützen.

In einer weiteren Vorrichtung wird über den Zulauf 20 nicht nur ein Behälterverschluss pro Zeiteinheit, sondern mindestens zwei, bevorzugt mehrere, Behälterverschlüsse parallel in die Vorrichtung 1 eingebracht. Dabei kann die Zuführung so gestaltet sein, dass sämtliche Behälterverschlüsse gleichzeitig auf die Pufferfläche 3 aufgebracht werden. In einer Weiterbildung ist es möglich, die Behälterverschlüsse parallel zueinander so zuzuführen, dass jeweils eines auf die Transportfläche 4 gelangt, und die anderen parallel dazu auf die Pufferfläche 3 geführt werden.

Selbstverständlich ist es auch denkbar, dass auf der Transportfläche 4 mindestens zwei Behälterverschlüsse parallel zueinander geführt werden, welche dann am Auslauf 24 ebenfalls parallel zueinander abgenommen werden.

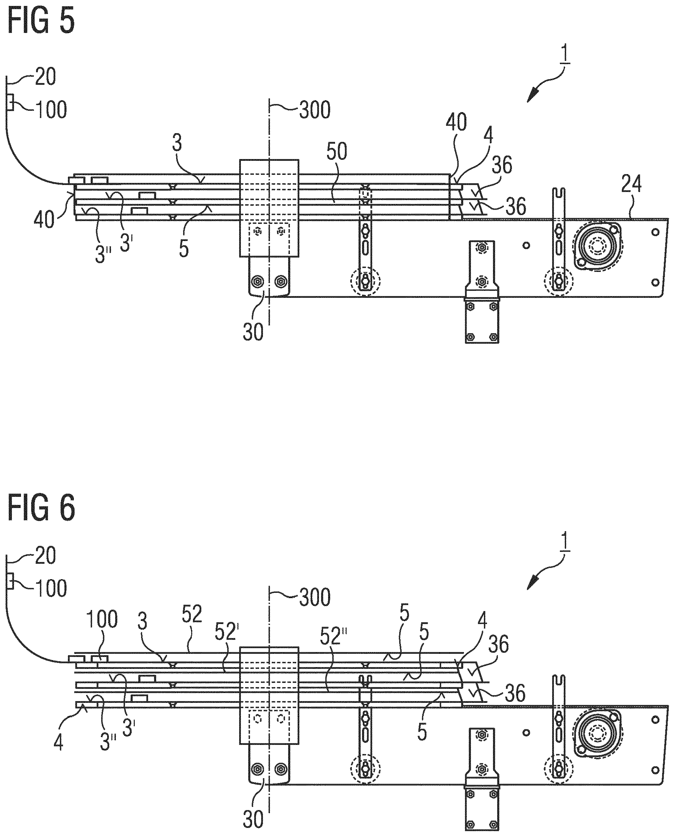

In Figur 5 ist schematisch eine Seitenansicht einer Vorrichtung 1 zum Puffern von Behälterverschlüssen 100 gezeigt, bei welcher drei rotierbare Pufferflächen 3, 3', 3" übereinander angeordnet sind. An die rotierbaren Pufferflächen 3, 3', 3" schließt sich jeweils eine Transportfläche 4 an. Die Pufferflächen 3, 3', 3" sind über Verbindungsflächen 36 miteinander verbunden, so dass Behälterverschlüsse 100 von der obersten Pufferfläche 3, auf die darunter liegende Pufferfläche 3' und dann auf die unter dieser liegende Pufferfläche 3" gelangen können. Die Verbindungsflächen 36 sind im Bereich der Transportflächen 4 angeordnet, können aber in einer nicht gezeigten Ausführungsform auch in anderen Bereichen an die Pufferflächen 3, 3', 3" anschließen, beispielsweise in einem Innenbereich der Pufferflächen. Die Verbindungsflächen 36 sind hier als Rutschen ausgebildet, können aber über jede geeignete Fördervorrichtung ausgebildet sein.

Der Zulauf 20 mündet hier in die oberste Pufferfläche 3 ein und der Auslauf 24 findet von der untersten Pufferfläche 3" aus statt. Mit anderen Worten durchläuft ein Behälterverschluss 100 vom Zulauf 20 aus zunächst die obere Pufferfläche 3, wird dann auf die mittlere Pufferfläche 3' verdrängt und von dieser auf die untere Pufferfläche 3" verdrängt, von wo aus das Behälterverschluss 100 dann über den Auslauf 24 wieder aus der Vorrichtung 1 ausgeschleust wird. Auf diese Weise kann die Pufferkapazität um einen Faktor entsprechend der Anzahl der übereinander angeordneten Pufferflächen 3, 3', 3" vergrößert werden.

In der gezeigten Vorrichtung dienen die Unterseiten der die Pufferflächen 3, 3' ausbildenden Bauteile 50, die hier in Form von Pufferscheiben ausgebildet sind, auch als Führungsflächen 5 für die Behälterverschlüsse 100. Der Abstand zwischen der jeweiligen Pufferfläche 3', 3" zu der darüber angeordneten Führungsfläche 5 ist so gewählt, dass die zwischen der Pufferfläche und der Führungsfläche aufgenommenen Behälterverschlüsse 100 ihre Orientierung beibehalten. So kann beispielsweise vermieden werden, dass in der korrekten Orientierung zugeführte Behälterverschlüsse 100 in Form von Behälterverschlüssen durch die Rotation der Pufferflächen 3', 3" umgeworfen werden. Entsprechend haben die Behälterverschlüsse 100 am Auslauf 24 weiterhin die korrekte Orientierung, so dass sie problemlos weiterverarbeitet werden können. In dem gezeigten Ausführungsbeispiel, in welchem die Unterseiten der die Pufferfläche ausbildenden Bauteile 50 die Führungsflächen 5 ausbilden, rotieren die Führungsflächen 5 mit den Pufferflächen mit, so dass die Reibung zwischen den Behälterverschlüssen 100 und den jeweiligen Puffer- und Führungsflächen gering gehalten werden kann.

Figur 6 zeigt eine weitere Vorrichtung mit drei übereinander angeordneten Pufferflächen 3, 3', 3" in einer ähnlichen Anordnung wie in Figur 5. Neben der Verbindung der Pufferflächen 3, 3', 3" über Verbindungsflächen 36 sind hier über jeder Pufferfläche 3, 3', 3" Führungsflächen 5 angeordnet, welche durch entsprechende Führungsscheiben 52, 52', 52" ausgebildet werden. Die Führungsscheiben 52, 52', 52" rotieren mit den Pufferflächen 3, 3', 3" mit. In einer nicht gezeigten Alternative kann aber mindestens eine Führungsscheibe 52, 52', 52" auch fest stehen und entsprechend nicht mitrotieren.

Der Abstand zwischen der jeweiligen Pufferfläche 3, 3', 3" und der darüber angeordneten, durch die Führungsscheibe 52, 52', 52" ausgebildeten Führungsfläche 5 ist so gewählt, dass er einer entsprechenden Dimension des Behälterverschlusses entspricht. Das Behälterverschluss 100 wird damit zwischen Pufferfläche und Führungsfläche geführt, so dass es seine korrekte Orientierung beim Durchlaufen der Vorrichtung 1 beibehält.

In einer besonders bevorzugten Weiterbildung ist der Abstand zwischen der jeweiligen Pufferfläche 3, 3', 3" und der zugeordneten Führungsfläche 52, 52', 52" einstellbar, um die Vorrichtung 1 an unterschiedliche Geometrien der Behälterverschlüsse 100 anpassen zu können.

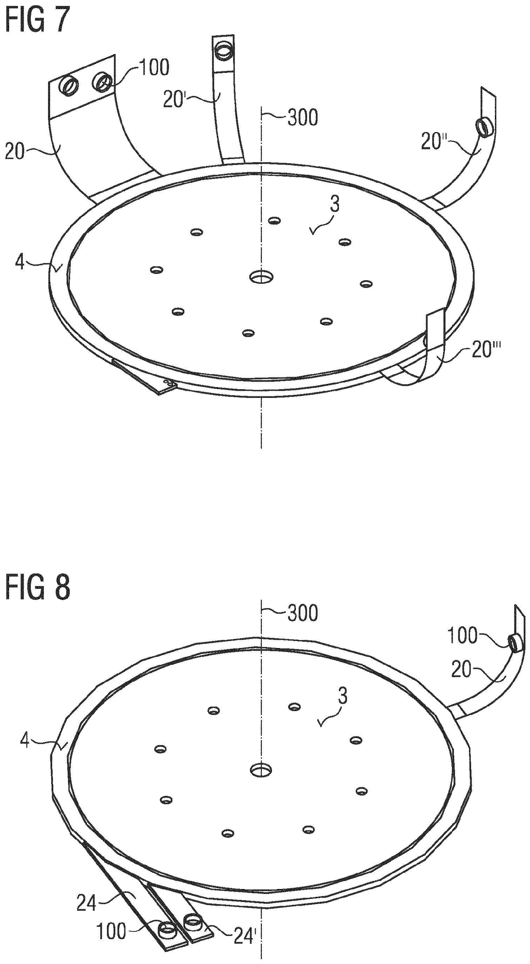

Figur 7 zeigt schematisch einen Aspekt der Vorrichtung, wobei mehrere Zuläufe 20, 20', 20", 20‴ vorgesehen sind, welche Behälterverschlüsse 100 auf die Pufferfläche 3 speisen. Einer der Zuläufe 20 ist auch mehrspurig ausgeführt, so dass hier auch parallel mindestens zwei Behälterverschlüsse 100 auf die Pufferfläche 3 aufgegeben werden können. Hier schließen die Zuläufe 20, 20', 20", 20‴ an die Transportfläche 4 an, über welche hinweg die Behälterverschlüsse 100 dann auf die Pufferfläche 3 aufgegeben werden.

Figur 8 zeigt schematisch einen weiteren Aspekt der Vorrichtung, gemäß welchem auch mehrere Ausläufe 24, 24' vorgesehen sein können, welche auch mehrspurig ausgeführt sein können. So können unterschiedliche nachgeschaltete Stationen mit Behälterverschlüssen 100 versorgt werden.

In Figur 9 wird eine erfindungsgemäße Ausführungsform auf Grundlage der vorstehenden Vorrichtungen gezeigt, bei welcher der Zulauf 20 direkt auf die Pufferfläche 3 mündet. Hier ist der Zulauf 20 so angeordnet, dass die Behälterverschlüsse 100 im Wesentlichen im Zentrum der Pufferfläche 3 aufgegeben werden und dann von dort aus nach außen wandern, um dann über die Transportfläche 4 zum Auslauf 24 zu gelangen.

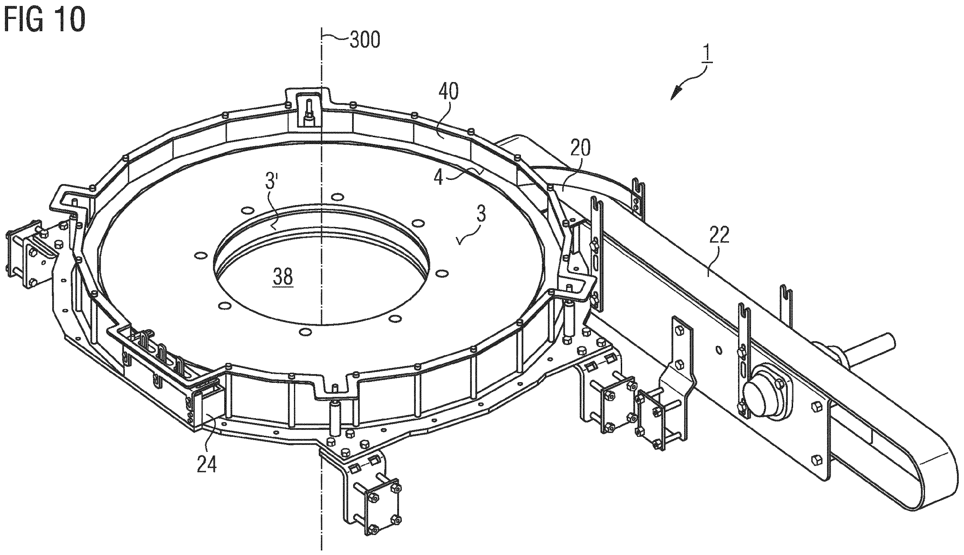

Figur 10 zeigt eine Vorrichtung 1 zum Puffern von Behälterverschlüssen 100. Hier sind die übereinander angeordneten Pufferflächen 3, 3' als Pufferringe ausgebildet, welche entsprechend in ihren Zentrum eine Wartungsöffnung 38 bereitstellen. Die Pufferringe weisen dabei bevorzugt eine hier nicht gezeigte innere Begrenzung für die Behälterverschlüsse auf 100, um ein Herabfallen von Behälterverschlüssen durch die Wartungsöffnung 38 hindurch zu vermeiden.

Durch die Wartungsöffnung 38 hindurch kann ein Bediener oder Wartungspersonal auch von unten her an die Pufferflächen 3, 3' gelangen, um dort Wartungsarbeiten vorzunehmen oder Störungen zu beseitigen. Die Wartungsöffnung 38 stellt dabei auch bei einem beengten Einbau der Vorrichtung 1 in einer Getränkeabfüllanlage einen Zugang zu den Pufferflächen 3, 3' bereit. Mit anderen Worten kann ein Bediener oder Wartungspersonal von unten durch die Wartungsöffnung 38 des Pufferrings hindurchreichen oder - je nach Dimensionierung - auch hindurch steigen, um Wartungsarbeiten oder andere Arbeiten auch an der Oberseite der Pufferfläche durchführen zu können.

### Bezugszeichenliste

- 1: Vorrichtung zum Puffern von Behälterverschlüssen
- 100: Behälterverschluss
- 20: Zulauf
- 20': Zulauf
- 20": Zulauf
- 20‴: Zulauf
- 22: Transportband
- 24: Auslauf
- 24': Auslauf
- 3: rotierbare Pufferfläche
- 3': zweite rotierbare Pufferfläche
- 3": dritte rotierbare Pufferfläche
- 30: Antrieb
- 32: Seitenwand
- 34: Abweisbereich
- 36: Verbindungsfläche (Rutsche)
- 38: Wartungsöffnung
- 300: Rotationsachse
- 4: Transportfläche
- 40: Außenwand
- 5: Führungsfläche
- 50: die Pufferfläche ausbildendes Bauteil
- 52: Führungsscheibe
- 52': zweite Führungsscheibe
- 52": dritte Führungsscheibe

- d: Höhenabstand

## Patentansprüche

1. Vorrichtung (1) zum Puffern von Behälterverschlüssen (100) in einer Getränkeabfüllanlage, wobei die Vorrichtung eine waagerecht orientierte Pufferfläche (3) zum Puffern von Behälterverschlüssen (100), eine waagerecht orientierte Transportfläche (4) sowie einen Zulauf (20) und einen waagerecht orientierten Auslauf (24) aufweist, zwischen denen die um eine Rotationsachse (300) rotierbare Pufferfläche (3) angeordnet ist, wobei
der Zulauf (20) direkt auf die Pufferfläche (3) mündet, die Pufferfläche (3) an die Transportfläche (4) anschließt, welche zum Transportieren der Behälterverschlüsse (100) vom Zulauf (20) zum Auslauf (24) dient, die Pufferfläche (3) von der Transportfläche (4) umgeben ist, die Transportfläche (4) um die Rotationsachse (300) der rotierbaren Pufferfläche (3) und unabhängig von der Pufferfläche (3) rotierbar ist,
wobei
der Zulauf (20) so angeordnet ist, dass die Behälterverschlüsse (100) im Wesentlichen im Zentrum der Pufferfläche (3) aufgegeben werden und dann durch die Rotation der Pufferfläche (3) von dort aus nach außen wandern, um dann über die Transportfläche (4) zum Auslauf (24) zu gelangen, **dadurch gekennzeichnet, dass** durch die waagerechte Orientierung der Pufferfläche
(3), der Transportfläche (4) sowie des Auslaufs (24) erreicht wird, dass eine Pufferung stattfindet, ohne dass danach ein zusätzlicher Höhenunterschied überwunden werden muss.

2. Vorrichtung (1) gemäß Anspruch 1, **dadurch gekennzeichnet, dass** die Pufferfläche (3) durch eine rotierbare Pufferscheibe ausgebildet ist.

3. Vorrichtung (1) gemäß einem der vorstehenden Ansprüche, **dadurch gekennzeichnet, dass** die Transportfläche (4) zum pufferfreien Transport der Behälterverschlüsse (100) vom Zulauf (20) zum Auslauf (24) dient.

4. Vorrichtung (1) gemäß Anspruch 3, **dadurch gekennzeichnet, dass** die Transportfläche (4) ringförmig ausgebildet ist und bevorzugt durch einen Transportring ausgebildet ist.

5. Verfahren zum Puffern von Behälterverschlüssen (100) in einer Getränkeabfüllanlage, unter Verwendung einer Vorrichtung nach einem der vorhergehenden Ansprüche, umfassend das Zuführen der Behälterverschlüsse (100) zur während des Zuführens der Behälterverschlüsse (100) rotierenden Pufferfläche (3), wobei die Behälterverschlüsse (100) mittels des Zulaufs direkt auf die Pufferfläche (3) aufgegeben werden und dann durch die Rotation der Pufferfläche (3) von dort aus nach außen wandern, um dann über die Transportfläche (4) zum Auslauf (24) zu gelangen.

## Claims

1. Device (1) for buffering container closures (100) in a beverage filling plant, wherein the device has a horizontally oriented buffer surface (3) for buffering container closures (100), a horizontally oriented transport surface (4), and an intake (20) and a horizontally oriented outlet (24), between which the buffer surface (3) rotatable about an axis of rotation (300) is disposed, wherein
the intake (20) leads directly onto the buffer surface (3), the buffer surface (3) adjoins the transport surface (4) for transport of the container closures (100) from the intake (20) to the outlet (24), the buffer surface (3) is encircled by the transport surface (4), the transport surface (4) is rotatable about the axis of rotation (300) and independently of the rotatable buffer surface (3), wherein
the intake (20) is arranged such that the container closures (100) are fed substantially in the center of the buffer surface (3) and then migrate outwards from there due to the rotation of the buffer surface (3) in order to pass via the transport surface (4) to the outlet (24),
**characterized in that**
due to the horizontal orientation of the buffer surface (3), the transport surface (4) and the outlet (24) it is achieved that buffering takes place without an additional height difference having to be overcome thereafter.

2. Device (1) according to claim 1, **characterized in that** the buffer surface (3) is formed by a rotatable buffer disk.

3. Device (1) according to one of the previous claims, **characterized in that** the buffer surface is used for transport of the container closures (100) from the intake (20) to the outlet (24) without buffering.

4. Device (1) according to claim 3, **characterized in that** the transport surface (4) is annular in form and preferably formed by a transport ring.

5. Method for buffering container closures (100) in a beverage filling plant, using a device (1) according to any one the previous claims, comprising the feeding of the container closures (100) to the during the feeding of the container closures (100) rotating buffer surface (3), wherein the container closures (100) are fed directly onto the buffer surface (3) by means of the intake and then move outwardly from there by the rotation of the buffer surface (3), in order to then reach the outlet (24) via the transport surface (4).

## Revendications

1. Dispositif (1) permettant de stocker des fermetures de récipients (100) dans une installation d'embouteillage de boissons, dans lequel le dispositif présente une surface de stockage (3) orientée horizontalement pour le stockage de fermetures de récipients (100), une surface de transport (4) orientée horizontalement ainsi qu'une entrée (20) et une sortie (24) orientée horizontalement, entre lesquelles est disposée la surface de stockage (3) pouvant tourner autour d'un axe de rotation (300), dans lequel
l'entrée (20) débouche directement sur la surface de stockage (3), la surface de stockage (3) se raccorde à la surface de transport (4) qui sert à transporter les fermetures de récipients (100) depuis l'entrée (20) vers la sortie (24), la surface de stockage (3) est entourée par la surface de transport (4), la surface de transport (4) peut tourner autour de l'axe de rotation (300) de la surface de stockage (3) rotative et indépendamment de la surface de stockage (3),
dans lequel
l'entrée (20) est disposée de sorte que les fermetures de récipients (100) sont déchargées sensiblement au centre de la surface de stockage (3) et se déplacent ensuite de là vers l'extérieur par la rotation de la surface de stockage (3) afin d'arriver ensuite à la sortie (24) par l'intermédiaire de la surface de transport (4), **caractérisé en ce que**
grâce à l'orientation horizontale de la surface de stockage
(3), de la surface de transport (4) ainsi que de la sortie (24), on obtient le fait qu'un stockage ait lieu sans qu'il faille ensuite surmonter une différence de hauteur supplémentaire.

2. Dispositif (1) selon la revendication 1, **caractérisé en ce que** la surface de stockage (3) est réalisée par un disque de stockage rotatif.

3. Dispositif (1) selon l'une des revendications précédentes, **caractérisé en ce que** la surface de transport (4) sert au transport sans stockage des fermetures de récipients (100) depuis l'entrée (20) vers la sortie (24).

4. Dispositif (1) selon la revendication 3, **caractérisé en ce que** la surface de transport (4) est réalisée sous forme annulaire et est de préférence réalisée par un anneau de transport.

5. Procédé permettant le stockage de fermeture de récipients (100) dans une installation d'embouteillage de boissons, à l'aide d'un dispositif selon l'une des revendications précédentes, comprenant l'amenée des fermetures de récipients (100) vers la surface de stockage
(3) tournant pendant l'amenée des fermetures de récipients (100), dans lequel les fermetures de récipients
(100) sont déchargées directement sur la surface de stockage (3) au moyen de l'entrée et se déplacent ensuite de là vers l'extérieur par la rotation de la surface de stockage (3) afin d'arriver ensuite à la sortie (24) par l'intermédiaire de la surface de transport (4).
